# EUROPÄISCHE PATENTSCHRIFT

(11) **EP 1 715 190 B1**
(45) Veröffentlichungstag und Bekanntmachung des Hinweises auf die Patenterteilung: **27.02.2008**
(21) Anmeldenummer: 06005395.6
(22) Anmeldetag: 16.03.2006
(51) Int. Cl.: F04D 17/16, F04D 29/66, F16F 15/00, F04D 19/04

(54) **Schwingungsreduzierendes Bauteil und damit ausgerüstetes Vakuumpumpsystem**
Vibration reducing apparatus and vacuum pump system incorporating the same
Dispositif réduisant les vibrations et système de pompe à vide ainsi équipé

(30) Priorität: 23.04.2005 DE 102005019054
(43) Veröffentlichungstag der Anmeldung: 25.10.2006
(73) Patentinhaber: Pfeiffer Vacuum GmbH, 35614 Asslar (DE)
(72) Erfinder: Eilers, Martin, 35614 Asslar (DE); Klabunde, Frank, 35576 Wetzlar (DE); Leiter, Frank, Dr., 35578 Wetzlar (DE)

(56) Entgegenhaltungen:
- EP-A- 1 283 368
- DE-A1- 10 119 075
- US-A- 4 352 643
- PATENT ABSTRACTS OF JAPAN Bd. 005, Nr. 093 (M-074), 17. Juni 1981 (1981-06-17) & JP 56 038598 A (HITACHI LTD), 13. April 1981 (1981-04-13)

## Beschreibung

Die Erfindung betrifft ein schwingungsreduzierendes Vakuumbauteil nach dem Oberbegriff des ersten Anspruches. Die Erfindung betrifft weiterhin ein Vakuumpumpsystem, welches mindestens eine Vakuumkammer, eine Vakuumpumpe und ein schwingungsdämpfendes Vakuumbauteil umfasst. Außerdem betrifft die Erfindung eine Vakuumpumpe mit Gaseinlass, Gasauslass, rotierenden oder oszillierenden Bauteilen, auf deren Bewegung die Pumpwirkung beruht, Antriebsmitteln zur Erzeugung der Bewegung, Lagermitteln zur Lagerung der rotierenden oder oszillierenden Bauteilen, Flanschbauteilen und mindestens einem schwingungsreduzierenden Bauteil.

In solchen Vakuumpumpsystemen wird durch die Bewegung rotierender und oszillierender Bauteile eine Pumpwirkung erzeugt, welche die Evakuierung von Vakuumkammern u.ä. ermöglicht. Durch diese Bewegung entstehen aber auch unerwünschte Schwingungen, die auf mit dem Vakuumpumpsystem verbundene Apparaturen übertragen werden. In einigen Anwendungen ist eine solche Übertragung von Schwingungen nicht tolerierbar, das Vakuumpumpsystem muss von der Apparatur schwingungstechnisch entkoppelt werden.

Der Stand der Technik für eine solche Entkopplung ist offenbart in DE-OS 101 19 075. Hier wird versucht, die Vakuumpumpe über eine schwingungsentkoppelnde Komponente mit Flansch und Analysesystem oder Vakuumkammer zu verbinden. Dadurch soll eine Übertragung der Schwingungen vermieden werden. Dabei werden aktive Bauelemente (Magnetlager) eingesetzt. Diese Lösung erfordert allerdings zusätzlichen Bauraum, der in den heute immer kleiner werdenden Systemen nicht zur Verfügung steht. Außerdem führen zusätzliche Baulängen im Vakuumsystem insbesondere vor dem Ansaugflansch zu Leitwertverlusten. Auch diese sind im Zuge der Effizienzsteigerung und angestrebter sinkender Leistungsaufnahme nicht oder schwer tolerierbar.

In DE 35 37 822 wird eine Vakuumpumpe vorgestellt, in der die Lager des schnelldrehenden Rotors durch ein System aus Elastomerringen gegen das Pumpengehäuse abgestützt wird. Dadurch wird die Übertragung von Schwingungen über die Lager reduziert. Leider zeigt sich, dass noch immer Schwingungen von der Vakuumpumpe übertragen werden, die das tolerierbare Maß überschreiten.

Ein weiteres Problem des genannten Standes der Technik ist die Frequenzcharakteristik. Diese ist weitgehend durch die Materialwahl gegeben und erfordert einen hohen Entwicklungsaufwand, da für jeden Einsatzbereich eine optimale Anpassung erarbeit werden muss. Insbesondere liegt die Dämpfungscharakteristik nach Ende der Entwicklungstätigkeit fest, eine Reaktion auf sich ändernde Umstände kann nur schwer erfolgen. Solche Änderungen, die gar im Betrieb der Pumpe auftreten, können gar nicht berücksichtigt werden.

Aufgabe der Erfindung ist es, die Schwingungsreduktion innerhalb von Vakuumsystemen zu verbessern und die Übertragung von Schwingungen auf eine Vakuumkammer oder ein ―kammersystem zu verhindern. Die Lösung soll eine Anpassung der Charakteristik der Schwingungsübertragung auch im Betrieb ermöglichen.

Die Aufgabe wird gelöst durch die kennzeichnenden Merkmale des ersten, des siebten und des achten Anspruchs.
Die bisher passiv ausgelegten schwingungsreduzierenden Bauteile werden erfindungsgemäß derart aktiv gestaltet, dass wenigstens eines der Bauelemente zu Schwingungen angeregt werden kann. Hierzu wird in das System mindestens ein schwingungsaufnehmendes Sensorbauteil eingebaut, welches die jeweils im Moment auftretenden Schwingungen aufnehmen und in ein elektronisch verwertbares Signal umformen. Eine Elektronik wertet dann dieses Signal aus und erzeugt damit ein Stellsignal, welches das oder die aktive(n) Bauelement(e) in Schwingungen versetzt. Diese Schwingungen sind gezielt gegenphasig zu den von dem Sensorbauteil aufgenommen Schwingungen, so dass in der Summe eine Auslöschung stattfindet.

Dadurch ist es möglich, Schwingungen nahezu komplett zu beseitigen und von dem restlichen Vakuumsystem, insbesondere den gegen Schwingungen empfindlichen Teilen, fern zu halten. Da elektronische Mittel eingesetzt werden, kann eine Veränderung der Dämpfungscharakteristik zu jeder Phase stattfinden, beispielsweise auch während des Betriebs. Das System bleibt optimiert auch wenn sich die Schwingungscharakteristik ändert. Für verschiedene Systemzusammensetzungen kann dasselbe schwingungsreduzierende Bauteil eingesetzt werden, spezielle Optimierungsarbeiten entfallen. Die Reduktion der Schwingungen nahezu bis zur vollständigen Auslöschung führt außerdem zu einer deutlichen Abnahme der hörbaren akustischen Schwingungen, also des Arbeitsgeräusches der Pumpe. Die Verwendung der aktiv schwingenden Bauteile erlaubt es, das schwingungsreduzierende Vakuumbauteil kürzer als im Stand der Technik zu gestalten. In diesem wird die Güte der Dämpfung der Schwingungen von der Baulänge mitbestimmt. Bei aktiven Bauteilen muss dieses nur groß genug sein, die maximale Schwinungsamplitude bewältigen zu können.

Die kennzeichnenden Merkmale der Unteransprüche stellen vorteilhafte Weiterbildungen dar.
In einer Ausführungsform wird ein Teil des vom schwingungsaufnehmenden Sensorbauteil aufgenommenen Schwingungsspektrum von den elektronischen Steuermitteln genutzt, um ein Stellsignal für das aktive Bauelement zu erzeugen. Hierdurch kann ein Beschränkung auf denjenigen Teil des Frequenzspektrums erreicht werden, in dem die am meisten störenden Schwingungen auftreten. Diese Maßnahme führt zu einer Verringerung des Verarbeitungsaufwands und bei Weglassen von tiefen Frequenzen zu einer Verringerung der Ansprechzeit.

Die Erfindung soll beispielhaft an einem Ausführungsbeispiel verdeutlicht werden.
- Fig. 1:: a) Achsschnitt durch ein erfindungsgemäß gestaltetes schwingungsreduzierendes Vakuumbauteil.
b) Schnitt in Ebene A-A.
- Fig. 2:: Schematische Darstelluung eines Vakuumpumpsystems, welches das erfindungsgemäße Vakuumbauteil benutzt.
- Fig. 3:: Achsschnitt durch eine Vakuumpumpe mit erfindungsgemäßen schwingungsreduzierenden Bauteilen.

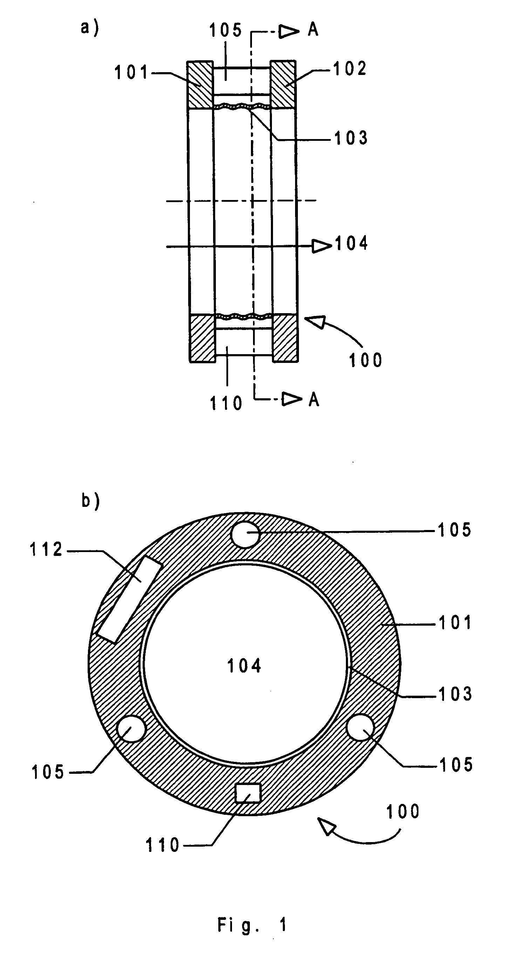

Ein beispielhaftes, erfindungsgemäß gestaltetes, schwingungsreduzierendes Vakuumbauteil 100 ist in Figur 1a im Achsschnitt gezeigt. Es besitzt zwei Flanschbauteile 101, 102, über die es mit anderen Vakuumkomponenten, z.B. einer Vakuumkammer, einer Vakuumpumpe oder einer Vakuumleitung, verbunden werden kann. Zwischen den beiden Flanschbauteilen sind die schwingungsreduzierenden Bauteile 105 und Dichtelemente 103 angeordnet. Eine durchgehende Öffnung 104 sorgt für eine Gasverbindung zwischen den beiden Flanschbauteilen. Gezeigt ist ferner das Sensorbauteil 110, welches die Schwingungen aufnimmt und damit der Elektronik 112 ein Signal gibt, nach dem diese ein Stellsignal für die aktiven Bauelemente erzeugen kann. Dieses Stellsignal regt die schwingungsreduzierenden Bauteile 105 zu einer gegenphasigen Schwingung an, so dass sich in der Summe die anregenden und die angeregten Schwingungen auslöschen. Das Sensorbauteil ist dabei so orientiert, dass es auf derjenigen Seite des Vakuumbauteils 100 sitzt, welche ruhig gestellt werden soll.

Figur 1b zeigt das schwingungsreduzierende Vakuumbauteil in einem Stirnschnitt in Ebene A-A. An dem Flansch 101 sind drei entlang des Umfangs gleichmäßig beabstandete schwingungsreduzierende Bauteile 105 angeordnet. Zwischen diesen und der Öffnung 104 befinden sich die Dichtelement 103, die den Innenraum vakuumdicht von der Umgebung und damit auch von den Bauteilen 105 trennen. Die Elektronik 112 wertet die Signale des Sensors 110 aus und steuert die Bauteile 105 an. Die Elektronik ist direkt am Flansch angebracht, so dass kein zusätzlicher Bauraum notwendig ist und das Gesamtsystem klein bleibt.
Im Beispiel der Figur 1 sind drei schwingungsreduzierende Bauteile 105 gezeigt. Natürlich kann auch eine andere Anzahl eingesetzt werden. Beispielsweise können sechs Bauteile 105 so angeordnet werden, dass immer zwei von ihnen an einem Befestigungspunkt zum Flanschbauteil zusammenkommen. Dabei ist jeweils die Paarung an dem einen Flanschbauteil verschieden von der Paarung am anderen Flanschbauteil.

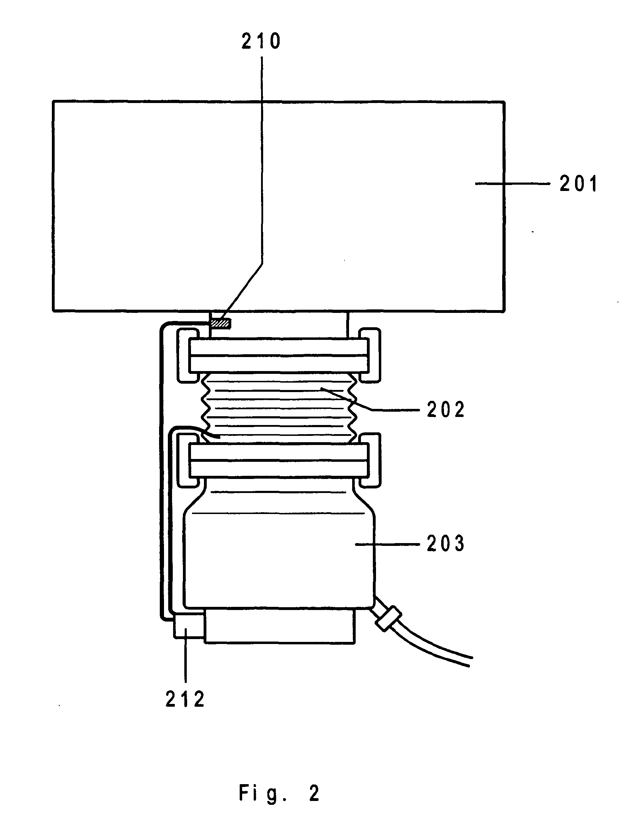

Figur 2 zeigt die Verwendung des erfindungsgemäßen, schwingungsreduzierenden Vakuumbauteils in einem Vakuumpumpsystem. Dieses weist eine zu evakuierende Vakuumkammer 201 und eine Vakuumpumpe 203 auf. Zwischen beiden sitzt das erfindungsgemäße, schwingungsreduzierende Vakuumbauteil. Gezeigt sind ferner das Sensorbauteil 210, welches die Schwingungen aufnimmt und damit der Elektronik 212 ein Signal gibt, nach dem diese ein Stellsignal für die aktiven Bauelemente erzeugen kann. In diesem Beispiel ist der Sensor nicht im schwingungsreduzierenden Bauteil angeordnet, sondern wird extern an der Vakuumkammer angebracht (also wieder dem zu beruhigenden Bauteil).

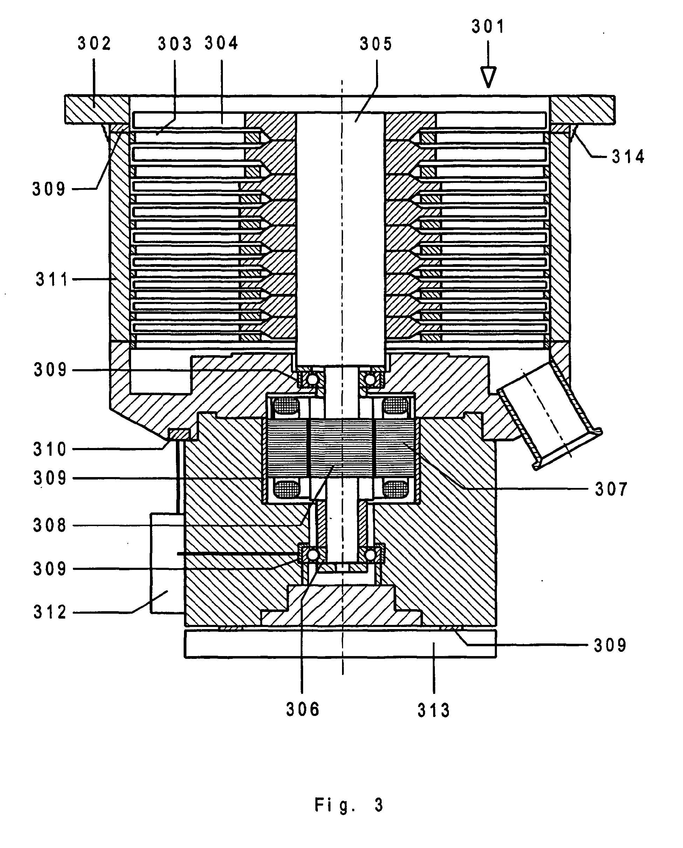

Die Figur 3 zeigt das Beispiel einer erfindungsgemäß gestalteten Turbomolekularpumpe 301 mit einem Gehäuse 311 und einem Flansch 302, mit dem diese an einer Vakuumkammer befestigt ist. Innerhalb der Turbomolekularpumpe sind feststehende 303 und rotierende 304 Bauteile so angeordnet und ausgebildet, dass eine Pumpwirkung erzielt wird. Die rotierenden Bauteile sind auf einer Welle 305 angeordnet, die mit Lagermitteln 306 drehbar gelagert sind. Diese Lagermittel können beispielsweise Kugellager oder Magnetlager sein. Antriebsmittel 307 versetzen die Welle in Rotation. Bei diesen Antriebsmitteln kann es sich beispielsweise um einen Elektromotor handeln, dessen Spulen im Gehäuse angebracht sind und der mit Magneten 308 auf der Welle zusammenwirkt.
Schwingungsreduzierende Bauteile 309 sind an einer oder einer Mehrzahl von Stellen im Gehäuse angebracht. Im gezeigten Beispiel sitzen diese Bauteile zwischen dem Flansch und dem Gehäuse. Dieser Bereich wird zudem über ein beispielsweise einen Federbalg 314 abgedichtet, so dass dieser Bereich insgesamt flexibel und gleichzeitig vakuumdicht gestaltet ist. Außerdem sind sie zwischen Lagermitteln und Gehäuse angeordnet. Erfindungsgemäß sind diese schwingungsreduzierenden Bauteile 309 nicht passiv in Form von Elastomeren ausgebildet sondern aktiv gestaltet. Eines der Bauteile 309 sitzt am Gehäuse der Vakuumpumpe, ist beispielsweise nachrüstbar ausgeführt. Es verbindet eine Masse 313 mit dem Gehäuse der Vakuumpumpe. Dieses Bauteil versetzt das Gehäuse der Vakuumpumpe gezielt in Schwingung. Als solche aktiven Bauelement werden vorteilhaft Piezoelemente verwendet. Diese können durch Anlegen einer Spannung in Schwingung versetzt werden. Ein Sensor 310 ermittelt die in der Turbomolekularpumpe auftretende Schwingungen. Diese Schwingungssignal wird von einer Elektronik 312 ausgewertet und in ein elektrisches Stellsignal umgesetzt, welches die Piezoelemente in Schwingung versetzt. Diese Schwingung erfolgt gegenphasig zu derjenigen, die der Sensor aufnimmt, so dass sich die Schwingungen gegenseitig aufheben. Je nach Zielsetzung ist der Sensor am Flansch oder am Gehäuse der Vakuumpumpe angebracht. Es kann auch eine Mehrzahl von Sensoren eingesetzt werden.

In einer vorteilhaften Weiterbildung der Vakuumpumpe kann die Masse 313 aus Teilen der zum Betrieb der Vakuumpumpe notwendigen Elektronik bestehen. Diese Elektronik umfasst im wesentlichen elektronische elektrische Mittel zur Konversion der externen Netzspannung (wie beispielsweise dem 220V Wechselspannungsnetz, dem Industriestandardspannungsnetz und andere) und/oder zur Ansteuerung der Antriebsmittel 307. Werden Magnetlager zur Lagerung der Welle 305 eingesetzt, kann die Elektronik ebenfalls die Lagersteuerung übernehmen.

## Patentansprüche

1. Schwingungsreduzierendes Vakuumbauteil (100), welches mindestens einen Flansch (101), dichtenden Bauteile (103), mindestens ein schwingungsreduzierendes Bauteil (105) und eine durchgehende Öffnung (104) umfasst, wobei mindestens eines der schwingungsreduzierenden Bauteile (105) ein aktives Bauelement ist, **dadurch gekennzeichnet, dass** das aktive Bauelement zu Schwingungen angeregt wird.

2. Schwingungsreduzierendes Vakuumbauteil nach Anspruch 1, **dadurch gekennzeichnet, dass** die schwingungsreduzierenden Bauteile mit einer elektronischen Steuereinheit (112) in elektrischem Kontakt stehen, welche ihrerseits mit mindestens einem schwingungsaufnehmenden Sensorbauteil (110) verbunden ist.

3. Schwingungsreduzierendes Vakuumbauteil nach Anspruch 1 oder 2, **dadurch gekennzeichnet, dass** es mit mindestens einem der schwingungsaufnehmenden Sensorbauteilen eine Einheit bildet.

4. Schwingungsreduzierendes Vakuumbauteil nach Anspruch 2 oder 3, **dadurch gekennzeichnet, dass** die elektronischen Steuermittel (112) im Vakuumbauteil (100) integriert sind.

5. Schwingungsreduzierendes Vakuumbauteil nach einem der vorhergehenden Ansprüche, **dadurch gekennzeichnet, dass** mindestens ein Teil des vom schwingungsaufnehmenden Sensorbauteil (110) aufgenommenen Schwingungsspektrums von den elektronischen Steuermitteln genutzt wird, um ein Stellsignal für das aktive Bauelement (105) zu erzeugen.

6. Schwingungsreduzierendes Vakuumbauteil nach einem der vorhergehenden Ansprüche, **dadurch gekennzeichnet, dass** das aktive Bauelement ein Aktuator auf Piezobasis ist.

7. Vakuumpumpsystem, welches mindestens eine Vakuumkammer, eine Vakuumpumpe und ein schwingungsreduzierendes Vakuumbauteil umfasst, **dadurch gekennzeichnet, dass** das schwingungsreduzierende Vakuumbauteil nach einem der Ansprüche 1 bis 6 gestaltet ist.

8. Vakuumpumpe (301) mit Gaseinlass, Gasauslass, rotierenden oder oszillierenden Bauteilen (303), auf deren Bewegung die Pumpwirkung beruht, Antriebsmitteln zur Erzeugung der Bewegung, Lagermitteln (306) zur Lagerung der rotierenden oder oszillierenden Bauteilen, Flanschbauteilen (302) und mindestens einem schwingungsreduzierendem Bauteil (309), wobei mindestens eines der schwingungsreduzierenden Bauteile ein aktives Bauelement ist, **dadurch gekennzeichnet, dass** das aktive Bauelement zu Schwingungen angeregt wird.

9. Vakuumpumpe nach Anspruch 8, **dadurch gekennzeichnet, dass** über eines der aktiven schwingungsreduzierenden Bauteile eine Masse (313) mit dem Gehäuse der Vakuumpumpe verbunden ist.

10. Vakuumpumpe nach Anspruch 9, **dadurch gekennzeichnet, dass** wenigstens ein Teil der zum Betrieb der Vakuumpumpe notwendige Elektronik zur Steuerung von Antrieb und Lager und/oder Spannungsumwandlung als Masse (313) verwendet wird.

## Claims

1. Vibration-reducing vacuum component (100) which comprises at least one flange (101), sealing components (103), at least one vibration-reducing component (105) and a through-opening (104), wherein at least one of the vibration-reducing components (105) is an active device, **characterised in that** the active device is excited to vibrate.

2. Vibration-reducing vacuum component according to Claim 1, **characterised in that** the vibration-reducing components are in electrical contact with an electronic control unit (112) which in turn is connected to at least one vibration-sensing sensor component (110).

3. Vibration-reducing vacuum component according to Claim 1 or 2, **characterised in that** it forms a unit with at least one of the vibration-sensing sensor components.

4. Vibration-reducing vacuum component according to Claim 2 or 3, **characterised in that** the electronic control means (112) is integrated in the vacuum component (100).

5. Vibration-reducing vacuum component according to any one of the preceding Claims, **characterised in that** at least a part of the vibration spectrum which is sensed by the vibration-sensing sensor component (110) is used by the electronic control means to generate a control signal for the active device (105).

6. Vibration-reducing vacuum component according to any one of the preceding Claims, **characterised in that** the active device is a piezo-based actuator.

7. Vacuum pump system which comprises at least one vacuum chamber, a vacuum pump and a vibration-reducing vacuum component, **characterised in that** the vibration-reducing vacuum component is configured according to any one of Claims 1 to 6.

8. Vacuum pump (301) with a gas inlet, a gas outlet, rotating or oscillating components (303), on the movement of which the pumping action is based, drive means for producing the movement, bearing means (306) for mounting the rotating or oscillating components, flange components (302) and at least one vibration-reducing component (309), wherein at least one of the vibration-reducing components is an active device, **characterised in that** the active device is excited to vibrate.

9. Vacuum pump according to Claim 8, **characterised in that** a mass (313) is connected to the casing of the vacuum pump by means of one of the active vibration-reducing components.

10. Vacuum pump according to Claim 9, **characterised in that** at least a part of the electronic system which is required to operate the vacuum pump for controlling the drive and bearing and/or voltage conversion is used as a mass (313).

## Revendications

1. Dispositif réducteur de vibrations pour systèmes à vide (100) comprenant au moins un collet (101), des éléments d'étanchéité (103), au moins un organe réducteur de vibrations (105) et une ouverture traversante (104), dans lequel au moins l'un des organes réducteurs de vibrations (105) est un organe actif, **caractérisé en ce que** ledit organe actif est excité pour entrer en vibration.

2. Dispositif réducteur de vibrations pour systèmes à vide selon la revendication 1, **caractérisé en ce que** les organes réducteurs de vibrations sont en contact électrique avec une unité de commande électronique (112) qui elle-même est reliée à au moins un composant capteur (110) qui détecte les vibrations.

3. Dispositif réducteur de vibrations pour systèmes à vide selon la revendication 1 ou 2, **caractérisé en ce que** ledit dispositif constitue un ensemble monobloc avec au moins l'un des composants capteurs détectant les vibrations.

4. Dispositif réducteur de vibrations pour systèmes à vide selon la revendication 2 ou 3, **caractérisé en ce que** les moyens de commande électronique (112) sont intégrés dans le dispositif pour systèmes à vide (100).

5. Dispositif réducteur de vibrations pour systèmes à vide selon l'une quelconque des revendications précédentes, **caractérisé en ce qu'**une partie au moins du spectre de vibrations détecté par le composant capteur (110) est utilisée par les moyens de commande électronique pour générer un signal de réglage destiné à l'organe actif (105).

6. Dispositif réducteur de vibrations pour systèmes à vide selon l'une quelconque des revendications précédentes, **caractérisé en ce que** l'organe actif est un actionneur à base d'éléments piézo-électriques.

7. Système de pompage à vide comprenant au moins une chambre à vide, une pompe à vide et un dispositif réducteur de vibrations, **caractérisé en ce que** le dispositif réducteur de vibrations est réalisé selon l'une quelconque des revendications 1 à 6.

8. Pompe à vide (301) équipée d'une ouverture d'admission des gaz, d'une ouverture de sortie des gaz, d'éléments rotatifs ou oscillants (303) sur le mouvement desquels repose l'effet de pompage, de moyens d'entraînement pour générer le mouvement, de moyen de logement sur paliers (306) des éléments rotatifs ou oscillants, de collets (302) et d'au moins un organe réducteur de vibrations (309), dans laquelle au moins l'un des organes réducteurs de vibrations est un organe actif, **caractérisée en ce que** ledit organe actif est excité pour entrer en vibration.

9. Pompe à vide selon la revendication 8, **caractérisée en ce qu'**une masse (313) est reliée au corps de la pompe à vide par le biais d'un des organes actifs réducteurs de vibrations.

10. Pompe à vide selon la revendication 9, **caractérisée en ce qu'**une partie au moins du système électronique nécessaire au fonctionnement de la pompe à vide est utilisée, en tant que masse (313), dans la commande de l'entraînement et du logement sur paliers et/ou dans la conversion de la tension.
